# EUROPÄISCHE PATENTANMELDUNG

(11) **EP 2 908 299 A1**
(43) Veröffentlichungstag der Anmeldung: **19.08.2015**
(21) Anmeldenummer: 15152107.7
(22) Anmeldetag: 22.01.2015
(51) Int. Cl.: G08B 25/01, A42B 3/04, B60W 40/09, G08B 21/02

(54) **Verfahren zum Erkennen eines Unfalls**

(30) Priorität: 13.02.2014 DE 102014202620
(71) Anmelder: ROBERT BOSCH GMBH, 70442 Stuttgart (DE)
(72) Erfinder: Moerbe, Matthias, 74360 Ilsfeld-Helfenberg (DE)

(57) **Zusammenfassung**

Die Erfindung betrifft ein Verfahren zum Erkennen eines Unfalls eines Fahrzeugs (6), mit dem mindestens eine Person (10) fährt, wobei mindestens eine Sensoreinrichtung (8), mit dem zumindest ein Wert mindestens einer kinematischen Größe der mindestens einen Person (10) ermittelt wird, an der mindestens einen Person (10) und eine Kontrolleinrichtung (4) an dem Fahrzeug (6) angeordnet wird, wobei für die mindestens eine Sensoreinrichtung (8) ein Ruhemodus als passiver Betriebsmodus und mindestens zwei aktive Betriebsmodi vorgesehen sind, wobei die mindestens eine Sensoreinrichtung (8) von der Kontrolleinrichtung (4) abhängig von einem Betriebszustand des Fahrzeugs (6), der von zumindest einem Wert mindestens einer kinematischen Größe des Fahrzeugs (6) abhängig ist, angesteuert und in einen der vorgesehenen Betriebsmodi versetzt wird, wobei von der mindestens einen Sensoreinrichtung (8) in einem aktiven Betriebsmodus ein Alarm ausgelöst wird, wenn der zumindest eine Wert der mindestens einen kinematischen Größe des Fahrers (10) wenigstens um einen Schwellwert von einem Referenzwert abweicht.

## Beschreibung

Die Erfindung betrifft ein Verfahren und eine Anordnung zum Erkennen eines Unfalls eines Fahrzeugs, mit dem eine Person fährt.

### Stand der Technik

Fahrer von sogenannten offenen und/oder einspurigen Fahrzeugen, bspw. von Zweirädern, sind im Straßenverkehr besonders gefährdet, da sie im Gegensatz zu Fahrern von geschlossenen Fahrzeugen, üblicherweise von Kraftfahrzeugen, nicht durch eine Karosserie geschützt sind. Wenn ein Fahrer eines offenen Fahrzeugs in einen Unfall verwickelt ist, sollte dieser automatisch detektiert und bedarfsweise ein Notruf an Rettungskräfte gesendet werden.

Die Druckschrift DE 10 2009 036 828 A1 beschreibt ein System und ein Verfahren zur Erkennung einer Unfallsituation und zur Aktivierung eines Notrufs mit einem Schutzhelm. Der Schutzhelm ist mit einer ersten Sensoreinheit zur Erfassung von Unfallkenngrößen und einer Übermittlungseinrichtung ausgestattet, mit der Sensordaten der ersten Sensoreinheit oder Auslösesignale an eine Steuereinheit übermittelt werden. Ebenfalls ist ein Sender zur Übermittelung eines Notrufsignals, der mit der Sensoreinheit gekoppelt ist, vorgesehen. Das System umfasst auch eine zweite Sensoreinheit, die mit der Steuereinheit verbunden und zur Erfassung von Unfallkenngrößen ausgebildet ist. Der Steuereinheit ist eine Auswerteeinheit zugeordnet, die das Vorliegen von Unfallkenngrößen beider Sensoreinheiten überprüft und den Sender bei Vorliegen von Unfallkenngrößen aktiviert.

### Offenbarung der Erfindung

Vor diesem Hintergrund werden ein Verfahren und eine Anordnung mit den Merkmalen der unabhängigen Patentansprüche vorgestellt. Ausgestaltungen sowie Vorteile des Verfahrens und der Anordnung gehen aus den abhängigen Patentansprüchen und der Beschreibung hervor.

Falls ein Fahrverhalten eines üblicherweise offenen Fahrzeugs, dem die vorgestellte Anordnung zugeordnet ist, instabil wird, wird von einer fahrzeugzugeordneten Kontrolleinrichtung an eine personenzugeordnete Sensoreinrichtung ein Startbefehl gesendet, wodurch die Sensoreinrichtung von einem Ruhemodus in einen Messmodus als ein aktiver Betriebsmodus versetzt wird. Das offene Fahrzeug kann als ein einspuriges, zweirädriges Fahrzeug, bspw. als ein Fahrrad oder Kraftrad bzw. Motorrad, oder ggf. als ein drei- oder vierrädriges offenes Fahrzeugs, bspw. als ein sog. Quad, das ein vierrädriges Motorrad darstellt, ausgebildet sein.

Die personenzugeordnete Sensoreinrichtung kann auch als Mobilsensor bezeichnet werden und umfasst ein funktechnisches Kommunikationsmodul, das auch als Empfangs- und Sendeeinheit bezeichnet werden kann, und mindestens ein Sensormodul, das als Lagesensor, Beschleunigungssensor, Drehratesensor und/oder Magnetfeldsensor ausgebildet sein kann. Mehrere Sensormodule bilden dabei eine Sensorbaugruppe. Außerdem umfasst die personenzugeordnete Sensoreinrichtung eine Datenverarbeitungseinheit und eine als Batterie ausgebildete Energiequelle. Die fahrzeugzugeordnete Kontrolleinrichtung umfasst mindestens ein funktechnisches Kommunikationsmodul, mindestens ein Sensormodul, eine Datenverarbeitungseinheit und eine Energiequelle.

Auf Grundlage von Werten von mindestens einer kinematischen Größe, die von dem mindestens einen Sensormodul der Sensoreinrichtung bereitgestellt und von der mindestens einen Datenverarbeitungseinheit der Sensoreinrichtung verarbeitet werden, wird ein Muster oder ein Verlauf einer Bewegung mindestens einer auf dem Fahrzeug fahrenden Person ermittelt. Außerdem wird von der mindestens einen Datenverarbeitungseinheit im Messmodus der Verlauf der Bewegung analysiert und auf das Vorliegen eines normalen Verhaltens oder eines nicht logischen Verhaltens, das von dem normalen Verhalten abweicht, untersucht. Hierzu wird ein aktuell gemessener Wert der mindestens einen kinematischen Größe der Person mit einem Referenzwert, der für diese mindestens eine kinematische Größe vorgesehen ist, verglichen. Außerdem wird ein aktuell gemessener Wert der mindestens einen kinematischen Größe des Fahrzeugs mit einem hierfür vorgesehenen Toleranzwert verglichen. Üblicherweise kann ein normales Verhalten über eine Abweichung des jeweiligen Werts von dem Referenzwert oder dem Toleranzwert definiert werden. Abhängig davon, wie sehr der jeweils aktuell gemessene Wert unter Berücksichtigung eines Schnellwerts von dem Referenzwert oder dem Toleranzwert abweicht, kann zwischen einem normalen und einem unlogischen Verhalten der Person und/oder des Fahrzeugs unterschieden werden.

Mit dem mindestens einen personenzugeordneten Sensormodul der Sensoreinrichtung wird eine Bewegungsmeldeeinheit zum Erkennen eines Unfalls, üblicherweise einer Schwere des Unfalls, bereitgestellt. Falls die Person nach einem Unfall bspw. auf einem Untergrund liegt und sich nur sehr beschränkt bewegen kann, wird nach einer definierbaren Wartezeit auf die Schwere des Unfalls geschlossen. Diese Maßnahme wird dann durchgeführt, wenn von der Person innerhalb der Wartezeit, die durch eine Zeitspanne definiert ist, manuell keine Notfallmeldung ausgelöst wird. In diesem Fall wird der Notruf nach Ablauf der Wartezeit automatisch ausgelöst. Eine Übertragung von Informationen zu dem Notruf wird codiert. Im Rahmen des Verfahrens wird von der fahrzeugzugeordneten Kontrolleinrichtung nur die mindestens eine personenzugeordnete, angelernte Sensoreinrichtung erkannt.

Ein Erfassen der Bewegung der Person wird erst dann ausgelöst, sobald der Zustand des Fahrzeugs instabil geworden ist. Dabei wird die mindestens eine, zunächst noch im Ruhemodus befindliche Sensoreinrichtung von der Kontrolleinrichtung aktiviert und somit geweckt, wobei die mindestens eine Sensoreinrichtung in den Messmodus versetzt wird. Durch diese Maßnahme wird Energie gespart und ein Speicherbedarf der mindestens einen als Auswerteeinheit verwendeten Datenverarbeitungseinheit der mindestens einen Sensoreinrichtung reduziert. Ein Muster eines Verhaltens des offenen Fahrzeugs und/oder der Person kann durch gefahrlose Versuche ermittelt werden. Außerdem ist es möglich, dass Personal eines Rettungsdienstes über die mindestens eine Kommunikationseinheit und/oder eine Antenne der Anordnung, die der fahrzeugzugeordneten Kontrolleinrichtung zugeordnet ist bzw. sind, noch am Ort des Unfalls mit einem Arzt direkt kommunizieren kann, der auf Grundlage des Verlaufs des Musters der Bewegung und/oder des Verhaltens der Person entscheiden kann, ob deren Zustand kritisch oder unkritisch ist.

Das Verfahren und die Anordnung können für sämtliche offenen Fahrzeuge, in der Regel für Zweiräder, unabhängig von deren Motorisierung, d. h. für unmotorisierte Zweiräder und somit für Fahrräder sowie für motorisierte Zweiräder, bspw. Motorräder, eingesetzt werden.

Mit dem mindestens einen Sensormodul der mindestens einen Sensoreinrichtung sowie der Kontrolleinrichtung kann in allen drei Raumrichtungen mindestens eine kinematische Größe, bspw. eine Position, eine Geschwindigkeit, eine Beschleunigung und eine Drehrate eines Körpers, d. h. der mindestens einen Person sowie des Fahrzeugs im Raum, ermittelt und daraus deren sowie dessen Bewegungszustand bestimmt werden. Bei der Verwendung des mindestens einen Sensormoduls zum Erkennen der Schwere des Unfalls, bspw. eines Sturzes, für die Person, die mit dem offenen Fahrzeug unterwegs ist, werden spezifische Randbedingungen betrachtet und somit berücksichtigt. Dabei kann mindestens eine spezifische Randbedingung anhand des Referenzwerts sowie des Toleranzwerts für die mindestens eine kinematische Größe zum Beschreiben der Bewegung der mindestens einen Person sowie des Fahrzeugs definiert werden.

Die mindestens eine personenzugeordnete Sensoreinrichtung ist am Körper der mindestens einen Person, die mit dem Fahrzeug fährt, anzuordnen und in der Regel mit einem Kleidungsstück der Person lösbar zu verbinden. Dabei ist die mindestens eine personenzugeordnete Sensoreinrichtung dazu ausgebildet, einen Normalzustand oder eine Nulllage anhand der im Einstellmodus erfassten Werte der mindestens einen kinematischen Größe und dem daraus abgebildeten Referenzwert selbsttätig und somit automatisch zu definieren. Demnach ist beim Anordnen der Sensoreinrichtung an der Person keine spezifische Orientierung im Raum (Einbaurichtung und Befestigung) zu berücksichtigen.

Zudem kann bei der Inbetriebnahme des Fahrzeugs und somit zu Beginn einer Fahrt für die mindestens eine personenzugeordnete Sensoreinrichtung deren aktuelle Lage bezogen auf das Erdmagnetfeld gespeichert und daraus ein Referenzwert für mindestens eine Raumrichtung zum Beschreiben der Lage ermittelt werden. Alle von dem mindestens einen Sensormodul der Sensoreinrichtung nachfolgend erfassten Bewegungen werden auf die zu Beginn einer Fahrt gespeicherte ursprüngliche Lage, die somit der vorgesehenen Nulllage entspricht, die über den im Einstellmodus ermittelten Referenzwert definiert ist, bezogen. Ein Zeitpunkt für eine Definition der Nulllage wird von der Anordnung nach Abschluss des Einstellmodus, in der Regel nach Überschreiten eines Grenzwerts für eine minimale Geschwindigkeit des Fahrzeugs, festgelegt.

Die mindestens eine personenzugeordnete Sensoreinrichtung weist in einer möglichen konstruktiven Ausgestaltung eine Grundfläche im Format einer Kreditkarte und eine Höhe von einigen Millimetern auf und kann in jeder Tasche eines Kleidungsstücks am Körper der Person, d. h. eines Fahrers oder Beifahrers, untergebracht werden. Beim Wechsel des Kleidungsstücks kann die personenzugeordnete Sensoreinrichtung in einem anderen Kleidungsstück angeordnet und somit untergebracht werden. Die personenzugeordnete Sensoreinrichtung kann in einem Einbaumodul oder einem Anbaumodul eines Schutzkleidungselements des Kleidungsstücks angeordnet werden.

Außerdem weist die mindestens eine personenzugeordnete Sensoreinrichtung eine üblicherweise interne, als Batterie ausgebildete elektrische Energiequelle auf. Die fahrzeugzugeordnete Kontrolleinrichtung ist mit dem Fahrzeug verbunden und kann von einer als Batterie ausgebildeten Energiequelle des Fahrzeugs mit elektrischer Energie versorgt werden. Weiterhin sind für die mindestens eine personenzugeordnete Sensoreinrichtung die Initialisierung im Einstellmodus und mindestens ein Ruhemodus oder Ruhezustand vorgesehen, in dem nur wenig Energie verbraucht wird, um deren Nutzungsdauer, die durch einen Ladezustand der Energiequelle beeinflusst wird, auszuweiten.

Falls die fahrzeugzugeordnete Kontrolleinrichtung und die mindestens eine personenzugeordnete Sensoreinrichtung nach dem Start des Fahrzeugs als zu sich zugehörig akzeptiert, wird die für die mindestens eine personenzugeordnete Sensoreinrichtung vorgesehene Nulllage über den Referenzwert der mindestens einen kinematischen Größe definiert. Danach wird die personenzugeordnete Sensoreinrichtung in den energiesparenden Ruhemodus versetzt, der während einer über den Toleranzwert definierten stabilen Bewegung während der Fahrt des Fahrzeugs und der damit fahrenden Person aufrechterhalten bleibt. Falls sich die mindestens eine personenzugeordnete Sensoreinrichtung in dem Ruhemodus befindet, kann sie lediglich durch die fahrzeugzugeordnete Kontrolleinrichtung aufgeweckt, in den Messmodus versetzt und demnach vollständig aktiviert werden.

Sobald durch das mindestens eine Sensormodul aufgrund einer Abweichung eines aktuellen Werts der mindestens einen kinematischen Größe des Fahrzeugs um einen Schwellwert von einem vorgesehenen Toleranzwert eine Grenze für eine instabile Bewegung des offenen Fahrzeugs erfasst und somit nachgewiesen wird, wird eine komplette Funktion der mindestens einen personenzugeordneten, im Ruhemodus befindlichen Sensoreinrichtung aktiviert und ein Ablauf der Bewegung der mindestens einen Person über die an der Person angeordnete Sensoreinrichtung vollständig erfasst und der fahrzeugzugeordneten Kontrolleinrichtung über elektromagnetische Wellen drahtlos mitgeteilt. Falls die Bewegung beendet wird, können auch Informationen über eine daraus resultierende fehlende Mobilität an die fahrzeugzugeordnete Kontrolleinrichtung übermittelt werden. Nur so lange ab einer Beendigung der Bewegung üblicherweise von der fahrzeugzugeordneten Kontrolleinrichtung kein Deaktivierungssignal für den Alarm empfangen wird, bspw. nach einer definierten Zeitspanne von einigen wenigen Minuten ab Beendigung der Bewegung, befindet sich die mindestens eine personenzugeordnete Sensoreinrichtung in dem Messmodus als aktiver Betriebsmodus.

Zum Überprüfen der Funktionsfähigkeit der mindestens einen personenzugeordneten Sensoreinrichtung wird durch Austausch von Daten zwischen der mindestens einen personenzugeordneten Sensoreinrichtung und der fahrzeugzugeordneten Kontrolleinrichtung für die mindestens eine personenzugeordnete Sensoreinrichtung eine Plausibilisierung durchgeführt. Werden dabei von der fahrzeugzugeordneten Kontrolleinrichtung Daten empfangen, die sich nicht als logisch erweisen, wird seitens der fahrzeugzugeordneten Kontrolleinrichtung entschieden, dass die Anordnung nicht vollständig funktionsfähig ist. In diesem Fall kann von der fahrzeugzugeordneten Kontrolleinrichtung der Person ein Signal, das vor mangelnder Funktionsfähigkeit warnt, bereitgestellt werden.

Ferner umfasst die Anordnung mindestens einen Datenspeicher, der in der fahrzeugzugeordneten Kontrolleinrichtung angeordnet ist. Ein derartiger Datenspeicher kann auch in der personenzugeordneten Sensoreinrichtung angeordnet sein. In dem mindestens einen Datenspeicher, der als Komponente jeweils einer der vorgesehenen Datenverarbeitungseinrichtungen ausgebildet ist, kann zur Rekonstruktion des Unfalls ein üblicherweise komprimierter Datensatz gespeichert werden, der Aufschluss über einen Ablauf des Unfalls und eine Schädigung der Person geben kann. Dabei können Daten auf dem mindestens einen Datenspeicher verschlüsselt gespeichert werden. Ferner ist vorgesehen, dass die fahrzeugzugeordnete Kontrolleinrichtung auf einen Datenspeicher der mindestens einen personenzugeordneten Sensoreinrichtung zugreifen und verschlüsselte Daten entschlüsseln kann.

Aus Sicherheitsgründen und zur Sicherung des Datenschutzes kann eine zusätzliche Leseeinrichtung, die auch als weitere Komponente der Anordnung ausgebildet sein kann, verwendet werden, wobei mit dieser Leseeinrichtung ein Zugriff auf die verschlüsselten Daten in dem mindestens einen Datenspeicher möglich ist. Außerdem ist ein im Rahmen des Verfahrens für die zu übertragenden Daten zu verwendendes Übertragungsformat normiert, wodurch die fahrzeugzugeordnete Kontrolleinrichtungen und die mindestens eine personenzugeordnete Sensoreinrichtung miteinander kommunizieren und demnach kombiniert werden können.

Die für die mindestens eine personenzugeordnete Sensoreinrichtung vorgesehenen unterschiedlichen Betriebsmodi werden von der fahrzeugzugeordneten Kontrolleinrichtung selbsttätig oder ausgehend von der fahrzeugzugeordneten Kontrolleinrichtung situationsabhängig gewählt und eingestellt, weshalb keine aktive Betätigung durch die Person erforderlich ist. Weitere Ausgestaltungen der Erfindung und sich daraus ergebende Vorteile gehen aus den beiliegenden Figuren hervor, anhand derer die Erfindung schematisch und ausführlich beschrieben ist.

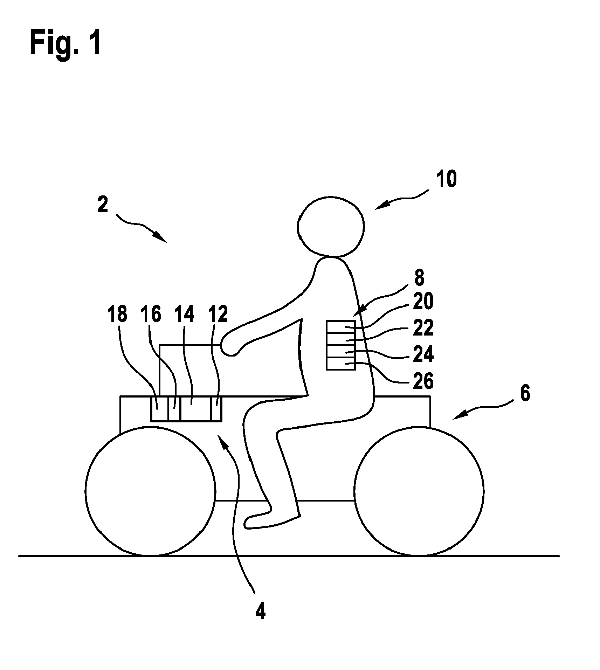

Figur 1 zeigt in schematischer Darstellung ein Beispiel für ein Fahrzeug und eine Ausführungsform einer erfindungsgemäßen Anordnung bei Durchführung einer Ausführungsform eines erfindungsgemäßen Verfahrens.

Die in Figur 1 schematisch dargestellte Ausführungsform der erfindungsgemäßen Anordnung 2 umfasst eine fahrzeugzugeordnete Kontrolleinrichtung 4, die hier an einem offenen, zweirädrigen und einspurigen Fahrzeug 6 angeordnet ist, das als Motorrad ausgebildet ist. Als weitere Komponente umfasst die Anordnung 2 eine personenzugeordnete Sensoreinrichtung 8, die einer Person 10, die mit dem Fahrzeug 6 fährt, zugeordnet ist.

Die fahrzeugzugeordnete Kontrolleinrichtung 4 umfasst hier ein fahrzeugzugeordnetes Kommunikationsmodul 12, eine fahrzeugzugeordnete Datenverarbeitungseinheit 14, die einen Datenspeicher umfasst, und mindestens ein Sensormodul 16. Außerdem umfasst die fahrzeugzugeordnete Kontrolleinrichtung 4 eine Antenne 18. Die genannten Komponenten der fahrzeugzugeordneten Kontrolleinrichtung 4 können in einem Gerät angeordnet oder auf unterschiedliche Geräte verteilt werden. Somit können hier Komponenten, die ohnehin als Bestandteile des Fahrzeugs 2 ausgebildet sind, im Rahmen des Verfahrens verwendet werden und somit auch als Komponente der Kontrolleinrichtung 4 definiert sein.

Die personenzugeordnete Sensoreinrichtung 8 umfasst als Komponenten ein personenzugeordnetes Kommunikationsmodul 20, eine personenzugeordnete Datenverarbeitungseinheit 22, die einen Datenspeicher umfasst, mindestens ein Sensormodul 24 und einen als Batterie ausgebildeten Energiespeicher 26, mit dem die personenzugeordnete Sensoreinrichtung 8 mit elektrischer Energie versorgt wird. Dabei ist hier vorgesehen, dass die personenzugeordnete Sensoreinrichtung 8 in einer Tasche eines Kleidungsstücks, das die Person 10 trägt, angeordnet und demnach auch an der Person 10 angeordnet ist.

Dabei ist das fahrzeugzugeordnete Kommunikationsmodul 12 der fahrzeugzugeordneten Kontrolleinrichtung 4 dazu ausgebildet, mit dem personenzugeordneten Kommunikationsmodul 20 der personenzugeordneten Sensoreinrichtung 8 über elektromagnetische Wellen Signale, die Daten übertragen, auszutauschen, wobei über die beiden Kommunikationsmodule 12, 20 zwischen der fahrzeugzugeordneten Kontrolleinrichtung 4 und dem personenzugeordneten Kommunikationsmodul 20 eine anordnungsinterne Kommunikation durchgeführt wird. Dabei ist vorgesehen, dass die fahrzeugzugeordnete Kontrolleinrichtung 4 dazu ausgebildet ist, einen Betrieb der personenzugeordneten Sensoreinrichtung 8 zu kontrollieren und somit zu steuern und/oder regeln, wobei von der fahrzeugzugeordneten Kontrolleinrichtung 4 auch unterschiedliche Betriebsmodi der personenzugeordneten Sensoreinrichtung 8 einzustellen sind.

Das mindestens eine fahrzeugzugeordnete Sensormodul 16 der fahrzeugzugeordneten Kontrolleinrichtung 4 ist dazu ausgebildet, mindestens eine kinematische Größe des Fahrzeugs 6, dass heißt eine Position, eine Geschwindigkeit und/oder eine Beschleunigung des Fahrzeugs 6 in zumindest einer Raumrichtung zu erfassen. Hierbei erfasste Werte der mindestens einen kinematischen Größe des Fahrzeugs 6 werden von der fahrzeugzugeordneten Datenverarbeitungseinheit 14 verarbeitet und/oder ausgewertet.

Die Antenne 18 der fahrzeugzugeordneten Kontrolleinrichtung 14 ist als Schnittstelle zum Austausch von Informationen mit einer externen Einrichtung über elektromagnetische Wellen, üblicherweise über eine mobile Kommunikationsverbindung, mit der auch ein Zugang zum Internet oder Mobilfunknetz möglich ist, ausgebildet.

Das mindestens eine personenzugeordnete Sensormodul 24 der personenzugeordneten Sensoreinrichtung 8 ist dazu ausgebildet, mindestens eine kinematische Größe der Person 10, dass heißt eine Lage bzw. Position, eine Geschwindigkeit und/oder eine Beschleunigung der Person 10 in zumindest einer Raumrichtung zu erfassen. Hierbei erfasste Werte der mindestens einen kinematischen Größe der Person 10 werden von der personenzugeordneten Datenverarbeitungseinheit 22 verarbeitet und/oder ausgewertet sowie über das personenzugeordnete Kommunikationsmodul 20 zu dem fahrzeugzugeordneten Kommunikationsmodul 12 übermittelt und von der fahrzeugzugeordneten Datenverarbeitungseinheit 14 verarbeitet und/oder ausgewertet. Außerdem können die sensorisch erfassten Werte der mindestens einen kinematischen Größe der Person 10 auch direkt von dem personenzugeordneten Kommunikationsmodul 20 zu dem fahrzeugzugeordneten Kommunikationsmodul 12 übertragen und von der fahrzeugzugeordneten Datenverarbeitungseinheit 14 verarbeitet und/oder ausgewertet werden.

Sowohl das mindestens eine Sensormodul 16 der fahrzeugzugeordneten Kontrolleinrichtung 4 als auch das mindestens eine personenzugeordnete Sensormodul 24 der personenzugeordneten Sensoreinrichtung 8, mit dem die mindestens eine kinematische Größe des Fahrzeugs 6 und der Person 10 zu erfassen ist, kann als Beschleunigungssensor, mit dem jeweils eine Beschleunigung des Fahrzeugs 6 oder der Person 10 zu erfassen ist, als Drehratensensor (Gyroskop), mit dem jeweils eine Drehung des Fahrzeugs 6 oder der Person 10 zu erfassen ist, und/oder als Magnetfeldsensor, mit dem eine Lage des Fahrzeugs 6 oder der Person 10 relativ zum Magnetfeld der Erde in mindestens einer Raumrichtung zu erfassen ist, ausgebildet sein.

In weiterer Ausgestaltung des Verfahrens und der Anordnung 2 ist es möglich, dass neben der hier gezeigten Person 10 als Fahrer des Fahrzeugs 6 noch mindestens eine weitere Person, üblicherweise ein Beifahrer, unterwegs ist. An dieser mindestens einen weiteren Person ist dann ebenfalls eine vorgestellte personenzugeordnete Sensoreinrichtung 8 zuordnen. Bei einer Durchführung der Ausführungsform des Verfahrens ist vorgesehen, dass die fahrzeugzugeordnete Kontrolleinrichtung 4 zugleich mehrere personenzugeordnete Sensoreinrichtungen 8 kontrollieren und abhängig von einem Betriebszustand des Fahrzeugs 6 in einen jeweils vorgesehenen Betriebsmodus versetzen kann.

Demnach ist das vorgestellte Verfahren zum Erkennen eines Unfalls eines Fahrzeugs 6, mit dem mindestens einen Person 10 fährt, vorgesehen. Hierzu wird die mindestens eine Sensoreinrichtung 8, mit der zumindest ein Wert mindestens einer kinematischen Größe der mindestens einen Person 10 ermittelt wird, an der mindestens einen Person 10 angeordnet. Die Kontrolleinrichtung 14 wird an dem Fahrzeug 6 angeordnet. Für die mindestens eine Sensoreinrichtung 8 sind als Betriebsmodi ein Ruhemodus als passiver Betriebsmodus und mindestens zwei aktive Betriebsmodi vorgesehen. Die mindestens eine Sensoreinrichtung 8 wird von der Kontrolleinrichtung 4 abhängig von einem Betriebszustand des Fahrzeugs 6, der von zumindest einem Wert mindestens einer kinematischen Größe des Fahrzeugs 6 abhängig ist, angesteuert und in einen der vorgesehenen aktiven oder passiven Betriebsmodi versetzt. Dabei wird von der mindestens einen Sensoreinrichtung 8 in einem aktiven Betriebsmodus ein Alarm ausgelöst, wenn der zumindest einen Wert der mindestens einen kinematischen Größe wenigstens um einen Schwellwert von dem Referenzwert abweicht.

Zu Beginn oder zum Start einer Fahrt mit dem Fahrzeug 6 wird die mindestens eine Sensoreinrichtung 8 von der Kontrolleinrichtung 4 in einen Einstellmodus als ein aktiver Betriebsmodus versetzt. Außerdem wird die mindestens eine Sensorvorrichtung 8 von der Kontrolleinrichtung 4 angesteuert und in den Ruhemodus als passiven Betriebsmodus versetzt, wenn ein Wert einer Geschwindigkeit als die mindestens eine kinematische Größe des Fahrzeugs 6 nach Beginn der Fahrt als Toleranzwert einen Grenzwert und somit eine definierbare Mindestgeschwindigkeit überschritten hat. Von der mindestens einen Sensoreinrichtung 8 wird in dem Einstellmodus zumindest ein Wert mindestens einer kinematischen Größe der Person 10 erfasst und daraus der Referenzwert für die mindestens eine kinematische Größe abgeleitet und somit ermittelt, wobei der Referenzwert für die mindestens eine kinematische Größe der Person 10 nach Beendigung des Einstellmodus in dem Datenspeicher der personenzugeordneten Sensoreinrichtung 8 gespeichert wird.

In einer weiteren möglichen Ausgestaltung ist es möglich, dass die Geschwindigkeit des Fahrers 6 ausgehend von einem Wert, der größer als der Grenzwert ist, verringert und wieder kleiner als der Grenzwert wird. In diesem Fall kann die mindestens eine Sensoreinrichtung 8 von der Kontrolleinrichtung 4 ausgehend von dem Ruhemodus wieder in den Einstellmodus versetzt werden, so lange der Wert der Geschwindigkeit geringer als der hierfür vorgesehene Grenzwert ist. Dabei kann der Referenzwert für die mindestens eine kinematische Größe der mindestens einen Person 10 der mindestens einen Sensoreinrichtung 8 erneut ermittelt und somit aktualisiert werden.

Von dem mindestens einen Sensormodul 24 der Sensoreinrichtung 8, das als Magnetfeldsensor ausgebildet ist, wird in dem Einstellmodus als aktiven Betriebsmodus als die mindestens eine kinematische Größe der Person 10 zumindest ein Wert für eine Lage der Person 10 in dem Magnetfeld der Erde erfasst.

Die mindestens eine Sensoreinrichtung 8 wird von der Kontrolleinrichtung 4 angesteuert und in den Messmodus als aktiven Betriebsmodus versetzt, wenn der zumindest eine Wert der mindestens einen kinematischen Größe des Fahrzeugs 6 um einen Schwellwert von einem Toleranzwert abweicht. Dabei wird von der mindestens einen Sensoreinrichtung 8 in dem Messmodus der zumindest eine Wert der mindestens einen kinematischen Größe der mindestens einen Person 10 erfasst und mit dem Referenzwert verglichen, wobei der Kontrolleinrichtung 4 von der mindestens einen Sensoreinrichtung 8 ein Signal, das über den Alarm informiert, bereitgestellt wird, wenn der zumindest eine Wert der mindestens einen kinematischen Größe der Person 10 wenigstens um den Schwellwert von dem Referenzwert abweicht.

Die fahrzeugzugeordnete Kontrolleinrichtung 4 wird über den Alarm, der von der im Messmodus befindlichen, mindestens einen personenzugeordneten Sensoreinrichtung 8 ausgelöst wird, alarmiert. Ein Notruf an eine Infrastruktureinrichtung wird von der Kontrolleinrichtung 4 nach Verstreichen einer Zeitspanne, die mit Auslösen des Alarms durch die mindestens eine Sensoreinrichtung 8 beginnt, von der Antenne 18 gesendet. Der Alarm wird jedoch aufgehoben, wenn von dem mindestens einen Fahrer 10 während der Zeitspanne ein Deaktivierungssignal für den Alarm bereitgestellt wird, wobei ein Senden des Notrufs in diesem Fall verhindert wird. Alternativ ist es möglich, dass der Notruf nach Auslösen des Alarms sofort gesendet wird.

## Patentansprüche

1. Verfahren zum Erkennen eines Unfalls eines Fahrzeugs (6), mit dem mindestens eine Person (10) fährt, wobei mindestens eine Sensoreinrichtung (8), mit dem zumindest ein Wert mindestens einer kinematischen Größe der mindestens einen Person (10) ermittelt wird, an der mindestens einen Person (10) und eine Kontrolleinrichtung (4) an dem Fahrzeug (6) angeordnet wird, wobei für die mindestens eine Sensoreinrichtung (8) ein Ruhemodus als passiver Betriebsmodus und mindestens zwei aktive Betriebsmodi vorgesehen sind, wobei die mindestens eine Sensoreinrichtung (8) von der Kontrolleinrichtung (4) abhängig von einem Betriebszustand des Fahrzeugs (6), der von zumindest einem Wert mindestens einer kinematischen Größe des Fahrzeugs (6) abhängig ist, angesteuert und in einen der vorgesehenen Betriebsmodi versetzt wird, wobei von der mindestens einen Sensoreinrichtung (8) in einem aktiven Betriebsmodus ein Alarm ausgelöst wird, wenn der zumindest eine Wert der mindestens einen kinematischen Größe des Fahrers (10) wenigstens um einen Schwellwert von einem Referenzwert abweicht.

2. Verfahren nach Anspruch 1, bei der die mindestens eine Sensoreinrichtung (8) von der Kontrolleinrichtung (4) zu Beginn einer Fahrt des Fahrzeugs (6) in einen Einstellmodus als ein aktiver Betriebsmodus versetzt wird, wobei die mindestens eine Sensorvorrichtung (8) von der Kontrolleinrichtung (4) angesteuert und in den Ruhemodus versetzt wird, wenn ein Wert einer Geschwindigkeit als die mindestens eine kinematische Größe des Fahrzeugs (6) nach Beginn der Fahrt einen Grenzwert überschritten hat, wobei von der mindestens einen Sensoreinrichtung (8) in dem Einstellmodus zumindest ein Wert mindestens einer kinematischen Größe der Person (10) erfasst und daraus der Referenzwert für die mindestens eine kinematische Größe ermittelt wird.

3. Verfahren nach Anspruch 2, bei dem von mindestens einem Sensormodul (24) der Sensoreinrichtung (8), das als Magnetfeldsensor ausgebildet ist, in dem Einstellmodus als die mindestens eine kinematische Größe der Person (10) zumindest ein Wert für eine Lage der Person (10) in dem Magnetfeld der Erde erfasst wird.

4. Verfahren nach einem der voranstehenden Ansprüche, bei dem die mindestens eine Sensoreinrichtung (8) von der Kontrolleinrichtung (4) angesteuert und in einen Messmodus als ein aktiver Betriebsmodus versetzt wird, wenn der zumindest eine Wert der mindestens einen kinematischen Größe des Fahrzeugs (6) um einen Schwellwert von einem Toleranzwert abweicht, wobei von der mindestens einen Sensoreinrichtung (8) in dem Messmodus der zumindest eine Wert der mindestens einen kinematischen Größe der mindestens einen Person (10) erfasst und mit dem Referenzwert verglichen wird, wobei der Kontrolleinrichtung (4) von der mindestens einen Sensoreinrichtung (8) ein Signal, das über den Alarm informiert, bereitgestellt wird, wenn der zumindest eine Wert wenigstens um den Schwellwert von dem Referenzwert abweicht.

5. Verfahren nach einem der voranstehenden Ansprüche, bei dem die Kontrolleinrichtung (4) über den Alarm, der von der im Messmodus befindlichen personenzugeordneten Sensoreinrichtung (8) ausgelöst wird, alarmiert wird, wobei von der Kontrolleinrichtung (4) aufgrund des von der Sensoreinrichtung (8) ausgelösten Alarms ein Notruf gesendet wird.

6. Verfahren nach Anspruch 5, bei dem der Notruf von der Kontrolleinrichtung (4) nach Verstreichen einer Zeitspanne, die mit Auslösen des Alarms durch die Sensoreinrichtung (8) beginnt, gesendet wird, wobei der Alarm aufgehoben wird, wenn von dem mindestens einen Fahrer (10) während der Zeitspanne ein Deaktivierungssignal für den Alarm bereitgestellt wird, wobei ein Senden des Notrufs in diesem Fall verhindert wird.

7. Verfahren nach einem der voranstehenden Ansprüche, das für ein offenes und/oder einspuriges Fahrzeug (6) durchgeführt wird.

8. Anordnung zum Erkennen eines Unfalls eines Fahrzeugs (6), mit dem mindestens eine Person (10) fährt, wobei die Anordnung (2) mindestens eine Sensoreinrichtung (8) und eine Kontrolleinrichtung (4) aufweist, wobei die mindestens eine Sensoreinrichtung (8) an der mindestens einen Person (10) anzuordnen sowie dazu ausgebildet ist, zumindest einen Wert mindestens einer kinematischen Größe der mindestens einen Person (10) zu ermitteln, wobei die Kontrolleinrichtung (4) an dem Fahrzeug (6) anzuordnen ist, wobei für die mindestens eine Sensoreinrichtung (8) ein Ruhemodus als passiver Betriebsmodus und mindestens zwei aktive Betriebsmodi vorgesehen sind, wobei die mindestens eine Sensoreinrichtung (8) von der Kontrolleinrichtung (4) abhängig von einem Betriebszustand des Fahrzeugs (6), der von zumindest einem Wert mindestens einer kinematischen Größe des Fahrzeugs (6) abhängig ist, anzusteuern und in einen der vorgesehenen Betriebsmodi zu versetzen ist, wobei von der mindestens einen Sensoreinrichtung (8) in einem aktiven Betriebsmodus ein Alarm auszulösen ist, wenn der zumindest eine Wert der mindestens einen kinematischen Größe des Fahrers (10) wenigstens um einen Schwellwert von einem Referenzwert abweicht.

9. Anordnung nach Anspruch 8, bei dem die mindestens eine Sensoreinrichtung (8) sowie die Kontrolleinrichtung (4) jeweils mindestens ein Sensormodul (16, 24) aufweist, mit dem die mindestens eine kinematische Größe zu erfassen ist.

10. Anordnung nach Anspruch 8 oder 9, bei dem die mindestens eine Sensoreinrichtung (8) sowie die Kontrolleinrichtung (4) jeweils mindestens ein Kommunikationsmodul (12, 20) aufweist, wobei die Sensoreinrichtung (8) und die Kontrolleinrichtung (4) über die Kommunikationsmodule (12, 20) untereinander Daten austauschen.
